(19) Europäisches Patentamt
European Patent Office
Office européen des brevets

(11) **EP 3 153 730 B1**

(12) **FASCICULE DE BREVET EUROPEEN**

(45) Date de publication et mention
de la délivrance du brevet:
**04.12.2019 Bulletin 2019/49**

(21) Numéro de dépôt: **16192204.2**

(22) Date de dépôt: **04.10.2016**

(51) Int Cl.:
*F16C 35/063* (2006.01)          *F16C 35/067* (2006.01)
*F16C 19/38* (2006.01)          *F16C 19/49* (2006.01)
*F16C 25/06* (2006.01)          *F16C 33/60* (2006.01)
*B64C 11/06* (2006.01)          *B64C 11/04* (2006.01)
*F16C 19/18* (2006.01)          *F16C 23/06* (2006.01)

(54) **ROULEMENT DE PIED DE PALE, SYSTÈME OSCILLANT ET SYSTÈME TOURNANT**

LAGER EINER WINDTURBINENSCHAUFEL, SCHWINGUNGS- UND DREHSYSTEM

BLADE-ROOT BEARING, OSCILLATING SYSTEM AND ROTATING SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.10.2015 FR 1559612**

(43) Date de publication de la demande:
**12.04.2017 Bulletin 2017/15**

(73) Titulaire: **NTN-SNR Roulements
74000 Annecy (FR)**

(72) Inventeur: **LEFORT, Guillaume
74000 Annecy (FR)**

(74) Mandataire: **Derambure Conseil
66, rue de la Chaussée d'Antin
75009 Paris (FR)**

(56) Documents cités:
**EP-A1- 2 853 733          WO-A2-2005/110032
DE-A1-102010 051 209          DE-A1-102012 205 556
FR-A1- 3 017 163          GB-A- 2 251 896
JP-A- 2012 082 844          US-A- 1 761 490
US-A- 5 209 701          US-A- 5 263 898
US-A1- 2010 244 454**

**Description**

L'invention concerne le domaine des roulements de pieds de pale.

Plus précisément, l'invention concerne le domaine des pales à angle d'incidence variable dans un boîtier tournant d'une hélice d'aéronef, ou autre application.

GB 2 251 896 décrit un exemple d'un roulement présentant une architecture complexe, avec de nombreuses pièces assemblées entre elles, ce qui pose des problèmes pour réaliser une étanchéité efficace. Ce produit occupe de plus un volume important, et doit être assemblé par l'utilisateur final lui-même directement sur l'axe. Cet assemblage par l'utilisateur final génère une multitude de risques de mauvais montages, et notamment un risque de mauvaise application de la précharge, qui conduit à des défaillances prématurées de ces roulements.

FR 2 862 609 décrit un exemple d'un tel produit dans lequel la pale est assemblée à un boîtier (appelé « moyeu » dans ce document) par une de ses extrémités, appelée pied de pale. Le pied est monté pivotant selon un axe sensiblement perpendiculaire et sécant avec l'axe du rotor dans une chambre du boîtier. Ce pivotement, entraîné au moyen d'un dispositif (non représenté) couplé à une extension d'un bouchon obturant le pied, permet un réglage de l'angle d'incidence de la pale.

La chambre comporte une paroi latérale, étagée, de révolution autour d'un axe radial de l'hélice qui, après montage de la pale, se confond sensiblement avec l'axe de la pale. La chambre débouche du côté du centre de l'hélice par un côté intérieur et du côté de la pale par un côté extérieur (dans ce document, et dans ce contexte, les termes « côté intérieur et côté extérieur » font référence à l'emplacement selon l'axe radial de l'hélice).

Des première et deuxième rangées de corps roulants, à contact oblique, sont montées entre une jupe ceinturant le pied, et une cuvette et une bague extérieure respectives montées sur la paroi latérale, selon un montage classique dit en O.

Les corps roulants, disposés à proximité des côtés extérieur et intérieur, respectivement, sont des rouleaux coniques et des billes à contact oblique, respectivement. Chaque rouleau comporte une grande base orientée vers le côté extérieur.

La cuvette et la bague extérieure, s'appuient sur la paroi par l'intermédiaire de pièces de protection en matière plastique. La bague extérieure du côté intérieur s'appuie sur un premier épaulement de boîtier, la bloquant axialement vers le côté extérieur (dans ce document, dans ce contexte, les termes « intérieur » et « extérieur » sont utilisés comme classiquement lors de la description d'un roulement, pour désigner l'emplacement radial par rapport à un axe du roulement).

Des chemins de roulement intérieurs des rouleaux et des billes, respectivement, sont ménagés dans la jupe de protection.

Lorsque l'hélice tourne, la pale subit deux actions:

- une force centrifuge ou axiale pour la pale et le roulement, fonction de sa vitesse de rotation et de sa masse,
- un moment de flexion en pied de pale dû à une force radiale sur la pale résultant de l'interaction de la pale et de l'air qu'elle brasse.

Pour reprendre efficacement ces actions, il est prévu de précharger les roulements, c'est-à-dire de créer et de maintenir une compression de leurs corps roulants entre leurs chemins de roulement.

Bien que cette réalisation donne toute satisfaction, on cherche toujours à améliorer les performances de ces produits, en maximisant les efforts supportables tout en minimisant l'encombrement.

Ces efforts de recherche ont conduits à redessiner entièrement l'architecture du produit roulement de pied de pale.

FR 3 017 163 décrit un roulement d'un pied d'une pale s'étendant selon une direction longitudinale entre une extrémité proximale et une extrémité distale, le roulement autorisant une oscillation du pied autour d'un axe s'étendant selon la direction longitudinale par rapport à un boîtier,

Le roulement comprenant :

- Une bague extérieure unique présentant une surface intérieure et une surface extérieure opposée à la surface intérieure, la surface intérieure de la bague extérieure présentant un premier chemin de roulement extérieur proximal et un deuxième chemin de roulement extérieur distal, les premier et deuxième chemins de roulement extérieurs étant décalés l'un par rapport à l'autre selon la direction longitudinale,
- Une première bague intérieure présentant une surface intérieure et une surface extérieure opposée à la surface intérieure, la surface extérieure de la première bague intérieure présentant un premier chemin de roulement intérieur proximal et un siège distal, le premier chemin de roulement intérieur et le siège étant décalés l'un par rapport à l'autre selon la direction longitudinale,
- Une deuxième bague intérieure présentant une surface intérieure et une surface extérieure opposée à la surface intérieure, la surface extérieure de la deuxième bague intérieure présentant un deuxième chemin de roulement intérieur distal, la deuxième bague intérieure étant emmanchée sur le siège et étant maintenue axialement en butée contre la première bague intérieure,

Un espace intérieur unique étant défini entre la surface intérieure de la bague extérieure et la surface extérieure des première et deuxième bagues intérieures, l'espace intérieur unique s'étendant entre une extrémité proximale où il est fermé par un système d'étanchéité proximal entre la bague extérieure et la première bague intérieure et une extrémité distale où il est fermé par un système d'étanchéité distal entre la bague extérieure et la deuxième bague intérieure,

- Une première rangée proximale de corps roulants montés dans l'espace intérieur unique, roulants sur les premiers chemins de roulement intérieur et extérieur proximaux et une deuxième rangée distale de corps roulants montés dans l'espace intérieur unique, roulants sur les deuxièmes chemins de roulement extérieur et intérieur distaux, les première et deuxième rangées de corps roulants étant espacées l'une de l'autre selon l'axe longitudinal,
- La surface intérieure de la première bague intérieure comprenant un épaulement d'assemblage à un pied de pale,
- La surface extérieure de la bague extérieure unique comprenant un épaulement d'assemblage à un boîtier.

Ci-après, un exposé de l'invention.

Selon l'invention, le roulement considéré comprend en outre un système de chargement adapté pour maintenir la deuxième bague intérieure axialement en butée contre la première bague intérieure.

Le système de chargement comprend une plaque annulaire présentant une surface d'appui en contact avec la deuxième bague intérieure et sollicitant la deuxième bague intérieure dans le sens axial, la plaque annulaire étant maintenue solidaire de la première bague intérieure par vissage.

Selon une réalisation, l'épaulement d'assemblage prévu sur la surface extérieure de la bague extérieure unique est disposé axialement entre les premières et deuxième rangées de corps roulants.

Selon une réalisation, l'épaulement d'assemblage prévu sur la surface intérieure de la première bague intérieure est disposé plus proximal que la première rangée proximale de corps roulants.

Selon une réalisation, la distance, normalement à la direction longitudinale, entre la surface intérieure de la première bague intérieure et la surface de réception de la deuxième bague intérieure au droit de celle-ci est définie par

$$E_p = \sqrt{\frac{4 * Sf * F_{précharge}}{0,9 * \pi * N * Re}} + \beta$$

, où

$E_p$ correspond à la distance, normalement à la direction longitudinale, entre la surface intérieure de la première bague intérieure et la surface de réception de la deuxième bague intérieure au droit de celle-ci,

$F_{précharge}$ est la force par laquelle la deuxième bague intérieure est maintenue axialement en butée contre la première bague intérieure,

Re est la limite élastique du matériau des vis,

N est le nombre de vis utilisées pour appliquer ladite force,

Sf est un paramètre de sécurité compris entre 1,2 et 4,

$\beta$ est un paramètre compris entre 4 et 5.

Selon une réalisation, la distance, normalement à la direction longitudinale, entre la surface intérieure de la première bague intérieure et la surface de réception de la deuxième bague intérieure au droit de celle-ci est supérieur à 5 et est définie par

$$E_p = \gamma \sqrt{\frac{4 * Sf * F_{précharge}}{0,9 * \pi * N * Re}}$$

, où

$E_p$ correspond à la distance, normalement à la direction longitudinale, entre la surface intérieure de la première bague intérieure et la surface de réception de la deuxième bague intérieure au droit de celle-ci,

$F_{précharge}$ est la force par laquelle la deuxième bague intérieure est maintenue axialement en butée contre la première bague intérieure,

Re est la limite élastique du matériau des vis,

N est le nombre de vis utilisées pour appliquer ladite force,

Sf est un paramètre de sécurité compris entre 1,2 et 4,

$\gamma$ est un coefficient pondérateur compris entre 1 et 1,8.

Selon une réalisation, N est l'entier le plus proche, ou l'entier immédiatement supérieur à $(\pi * d_{arbre})/(3,8 * d_{vis})$, où

$d_{arbre}$ est le diamètre intérieur de la première bague intérieure,

$d_{vis}$ est le diamètre des vis.

Selon une réalisation, les corps roulants des deux rangées de corps roulants présentent le même type de géométrie.

Selon une réalisation, les corps roulants de la première rangée, proximale, de corps roulants, sont des troncs de cône disposés avec le diamètre maximal du côté proximal.

Selon une réalisation, la distance entre le premier chemin de roulement extérieur proximal et l'épaulement d'assemblage à un boitier est au moins égal à $\delta_r * d_{max}$, où $\delta_r$ est un paramètre de sécurité compris entre 1 et 1,5, et $d_{max}$ est le diamètre maximal des corps roulants de la première rangée, proximale, de corps roulants.

Selon une réalisation, la distance entre le premier chemin de roulement intérieur proximal et l'épaulement d'assemblage à un pied de pale est au moins égal à $\eta_{1r}*(d_{arbre})^{n1r}$, où $\eta_{1r}$ est un paramètre au moins égal à 0,4, $d_{arbre}$ désigne le diamètre intérieur de la surface intérieure de la première bague intérieure, et n1r est un paramètre compris entre 0,4 et 0,5.

Selon une réalisation, l'axe des corps roulants de la première rangée, proximale, de corps roulants forme avec la direction longitudinale un angle compris entre 35° et 45°, le diamètre minimal du tronc de cône étant plus proche de l'axe que le diamètre maximal.

Selon une réalisation, les corps roulants de la deuxième rangée, distale, de corps roulants, sont des troncs de cône disposés avec le diamètre maximal du côté distal.

Selon une réalisation, la distance, mesurée selon la direction longitudinale, entre le premier chemin de roulement extérieur proximal et le deuxième chemin de roulement extérieur distal est compris entre 0,4*l1 et l1, où l1 désigne la longueur des corps roulants de la première rangée, proximale, de corps roulants.

Selon une réalisation, la distance entre le deuxième chemin de roulement intérieur distal et la surface intérieure de la deuxième bague intérieure est au moins égale à $\eta_{2r}*(d_{arbre2})^{n2r}$, où $\eta_{2r}$ est un paramètre au moins égal à 0,4, $d_{arbre2}$ désigne le diamètre intérieur de la surface intérieure de la première bague intérieure, et n2r est un paramètre compris entre 0,4 et 0,5.

Selon une réalisation, l'axe des corps roulants de la deuxième rangée, distale, de corps roulants forme avec la direction longitudinale un angle compris entre 17° et 23°, le diamètre minimal du tronc de cône étant plus proche de l'axe que le diamètre maximal.

Selon une réalisation, les corps roulants de la première rangée, proximale, de corps roulants, sont des billes.

Selon une réalisation, la distance radiale depuis la surface extérieure de la bille de la première rangée, proximale, de corps roulants jusqu'à la surface extérieure de la bague extérieure est au moins égale à $\delta_{1eb}*\varphi_1$, où $\delta_{1eb}$ est un paramètre de sécurité supérieur à 0,45, et $\varphi_1$ est le diamètre des billes de la première rangée, proximale, de corps roulants, et ladite distance est supérieure à 8 millimètres.

Selon une réalisation, la distance radiale depuis la surface extérieure de la bille de la première rangée, proximale, de corps roulants jusqu'à la surface intérieure de la première bague intérieure est au moins égal à $\delta_{1ib}*\varphi_1$, où $\delta_{1ib}$ est un paramètre de sécurité supérieur à 0,45, et $\varphi_1$ est le diamètre des billes de la première rangée, proximale, de corps roulants, et ladite distance est supérieure à 8 millimètres.

Selon une réalisation, l'axe des efforts appliqués aux corps roulants de la première rangée, proximale, de corps roulants forme avec la direction longitudinale un angle compris entre 25° et 35°.

Selon une réalisation, les corps roulants de la deuxième rangée, distale, de corps roulants, sont des billes.

Selon une réalisation, la distance radiale depuis la surface extérieure de la bille de la deuxième rangée, distale, de corps roulants jusqu'à la surface extérieure de la bague extérieure est au moins égale à $\delta_{2eb}*\varphi_2$, où $\delta_{2eb}$ est un paramètre de sécurité supérieur à 0,4, et $\varphi_2$ est le diamètre des billes de la deuxième rangée, distale, de corps roulants, et dans lequel ladite distance est supérieure à 6 millimètres.

Selon une réalisation, la distance radiale depuis la surface extérieure de la bille de la deuxième rangée, distale, de corps roulants jusqu'à la surface intérieure de la deuxième bague intérieure est au moins égale à $\delta_{2eb}*\varphi_2$ où $\delta_{2eb}$ est un paramètre de sécurité supérieur à 0,4, et $\varphi_2$ est le diamètre des billes de la deuxième rangée, distale, de corps roulants, et ladite distance est supérieure à 6 millimètres.

Selon une réalisation, la distance, mesurée selon la direction longitudinale, entre les billes de la première rangée de corps roulants et les billes de la deuxième rangée de corps roulants est supérieure à $(\varphi1+\varphi2)/v$, où $\varphi1$ désigne le diamètre des billes de la première rangée de corps roulants, $\varphi2$ désigne le diamètre des billes de la deuxième rangée de corps roulants, et v est un paramètre compris entre 2 et 4,2.

Selon une réalisation, l'axe des efforts appliqués aux corps roulants de la deuxième rangée, distale, de corps roulants forme avec la direction longitudinale un angle compris entre 15° et 25°.

Selon une réalisation, la hauteur de l'épaulement d'assemblage au boîtier est définie manière à répondre aux conditions suivantes :

$$10 < \Phi1 / 2*He < 25,$$

où $\Phi1$ correspond au diamètre extérieur de la bague extérieure au niveau de la première rangée proximale de corps roulants.

Selon un autre aspect, l'invention se rapporte à un système oscillant comprenant un tel roulement, un boîtier assemblé à l'épaulement d'assemblage à un boîtier de la surface extérieure de la bague extérieure unique, une pale comprenant un pied de pale assemblé à l'épaulement d'assemblage à un pied de pale de la surface intérieure de la première bague intérieure, la pale étant montée oscillante autour dudit axe s'étendant selon la direction longitudinale par rapport au boîtier par l'intermédiaire du roulement.

Selon un autre aspect, l'invention se rapporte à un système tournant autour d'un axe de rotation, le système comprenant au moins un tel système oscillant s'étendant radialement par rapport à l'axe de rotation, le roulement étant distant de l'axe de rotation.

On décrit maintenant brièvement les figures des dessins.

La figure 1 est un schéma de principe en perspective d'un rotor.

La figure 2 est une vue en coupe d'un premier exemple de réalisation d'un roulement de pied de pale.

La figure 3 est une vue en coupe d'un deuxième exemple de réalisation d'un roulement de pied de pale.

Ci-après un exposé détaillé de plusieurs modes de réalisation de l'invention assorti d'exemples et de référence aux dessins.

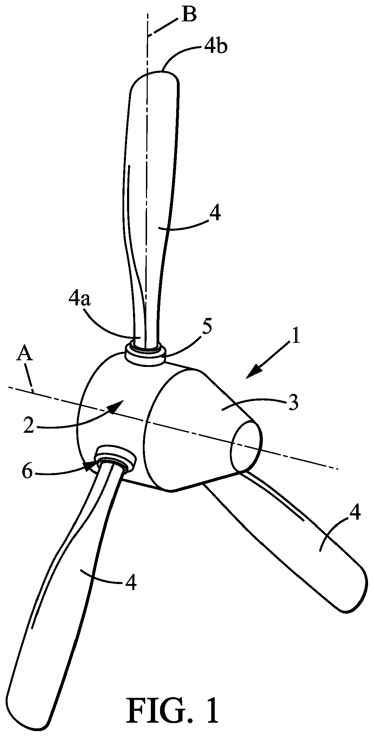

La figure 1 représente schématiquement en trois dimensions en perspective un exemple d'un système tournant 1 selon un exemple de mise en oeuvre de l'invention. Le système tournant 1 comprend un moyeu (non représenté) d'axe A autour duquel est monté rotatif un rotor 2. Le rotor 2 tourne par rapport au moyeu autour de l'axe A. Le rotor 2 comprend un corps principal 3, par exemple symétrique de révolution autour de l'axe A. Le rotor 2 comprend également une ou plusieurs pales 4 (dans l'exemple, trois pales 4), s'étendant chacune radialement par rapport au moyeu. Chaque pale 4 s'étend selon un axe longitudinal B. Une pale pouvant avoir une forme très complexe, il est difficile de définir très précisément l'axe longitudinal B, si ce n'est qu'il correspond à la direction principale de la pale 4. Aussi, quand on dit que la pale 4 s'étend « radialement », on n'implique pas nécessairement que l'axe B intersecte l'axe A ou s'étende dans un plan perpendiculaire à l'axe A, mais la direction générale de la pale 4 tend vers une direction radiale.

La pale 4 s'étend entre une extrémité, appelée pied de pale 4a, où elle est assemblée au corps principal 3, et une extrémité opposée 4b libre. La pale 4 est montée, au niveau de son pied 4a, dans un boîtier 5 solidaire du corps principal 3. La pale 4 est montée oscillante dans le boîtier 5 par l'intermédiaire d'un roulement (décrit en détail plus loin) monté entre le pied de pale 4a et le boîtier 5. Le roulement en question présente un axe de roulement, et l'oscillation de la pale 4 par rapport au boitier 5 est autorisée par rapport à cet axe. L'axe en question est clairement défini et s'étend sensiblement selon l'axe B. Pour fixer les idées, on peut considérer que l'axe B correspond à l'axe du roulement et, par la suite, on appellera B l'axe du roulement.

En fonctionnement, la pale 4 va tourner par rapport au boîtier 5 autour de l'axe B, mais a priori sur une course angulaire inférieure à 360°. Par contre, la pale 4 va osciller par rapport au boîtier 5 autour de l'axe B par des mouvements de va-et-vient contrôlés, selon les efforts transmis par la pale au fluide (air) environnant.

Le boîtier 5 est tout composant permettant cette mise en oeuvre.

Comme expliqué ci-dessus, le roulement est par conséquent excentré par rapport à l'axe A, et est par conséquent soumis à une forte centrifugation autour de cet axe A lors de la mise en oeuvre du système tournant 1.

La présente invention est décrite dans un contexte particulier, mais semble applicable à d'autres contextes d'un roulement oscillant autour d'un axe radial et centrifugé autour d'un axe axial.

L'ensemble du boîtier 5, du roulement, et du pied de pale 4a est ainsi appelé un système oscillant 6.

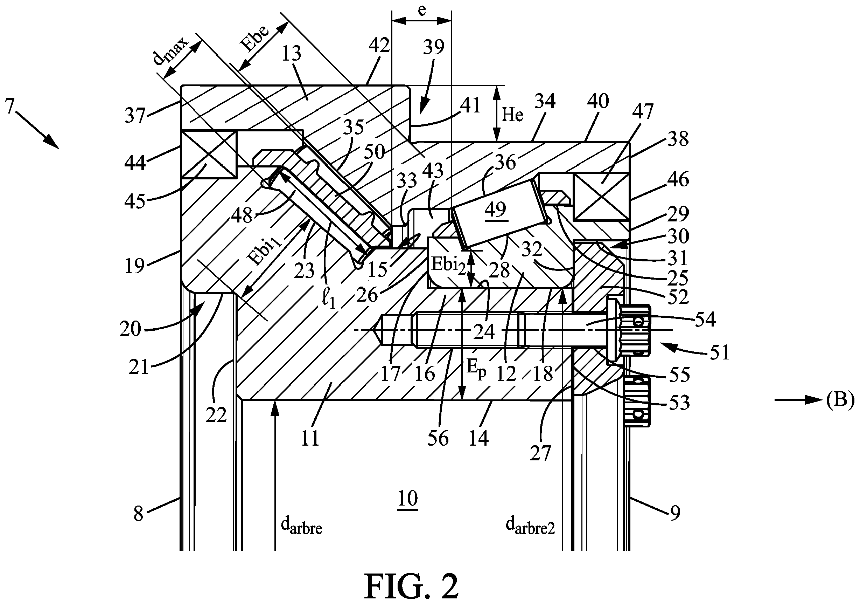

La figure 2 représente un premier mode de réalisation d'un roulement selon l'invention.

Dans ce qui suit, le terme « axial » fait référence à l'axe B de ce roulement 7, parallèle à la direction (B) représentée. Le terme « proximal » fait référence à la proximité d'un composant à l'axe A, alors que le terme « distal » fait référence à l'éloignement d'un composant de l'axe A.

Le roulement 7 comprend donc un côté proximal 8 et un côté distal 9, opposé au côté proximal 8.

Le roulement 7 définit un alésage intérieur 10 dans lequel le pied de pale 4 est destiné à être monté.

Dans ce qui suit, le terme « intérieur » est utilisé pour désigner la proximité à l'axe B, alors que le terme « extérieur » est utilisé pour désigner l'éloignement de l'axe B.

Le roulement 7 comprend une première bague intérieure 11, une deuxième bague intérieure 12, et une bague extérieure 13 unique. Les bagues intérieures 11 et 12 sont appelées ainsi car elles comportent chacune un chemin de roulement intérieur pour des corps roulants, et la bague extérieure 13 est appelée ainsi car elle comporte des chemins de roulement extérieurs pour des corps roulants, comme ce sera expliqué plus en détail par la suite.

La première bague intérieure 11 comprend une surface intérieure 14 et une surface extérieure 15 opposée à la surface intérieure 14. La surface intérieure 14 peut présenter toute géométrie appropriée. Par exemple, la surface intérieure 14 peut être composée de deux surfaces cylindriques de révolution chacune au droit d'une rangée de corps roulants, avec interposition d'une gorge au centre. La surface intérieure 14 est utilisée pour le montage du roulement 7 sur le pied de pale. La surface intérieure 14 présente un diamètre minimal $d_{arbre}$. La première bague intérieure 11 s'étend axialement depuis le côté proximal 8 en direction du côté distal 9, sur une grande majorité de la longueur axiale du roulement 7.

Dans la moitié distale du roulement 7, la surface extérieure 15 de la première bague intérieure 11 définit un siège distal 16 pour la réception de la deuxième bague intérieure 12. Le siège distal 16 comprend une surface de butée axiale 17 faisant face au côté distal 9, et une surface cylindrique de réception 18 orientée vers l'extérieur, et s'étendant depuis la surface de butée axiale 17.

Dans la moitié proximale du roulement 7, la surface extérieure 15 définit un premier chemin de roulement 23 proximal.

La première bague intérieure 11 comporte une surface d'extrémité proximale 19. La surface intérieure 14 de la première bague intérieure 11 comprend un épaulement 20 d'assemblage à un pied de pale. L'épaulement 20 comprend une surface cylindrique 21 s'étendant depuis la surface d'extrémité proximale 19 en direction de l'extrémité distale, une surface de butée axiale 22 faisant face au côté proximal 8, et s'étendant depuis la surface cylindrique 21 jusqu'à l'alésage 10.

La première bague intérieure 11 comporte une surface d'extrémité distale 27, opposée à la surface de butée axiale 22 et faisant face au côté distal 9.

La deuxième bague intérieure 12 comprend une surface intérieure 24 et une surface extérieure 25 opposée à la surface intérieure 24. La surface intérieure 24 est utilisée pour le montage de la deuxième bague intérieure 12 dans le siège 16 de la première bague intérieure par emmanchement. La surface intérieure 24 présente un diamètre minimal $d_{arbre2}$. La surface intérieure 24 fait donc face, en étant complémentaire, à la surface cylindrique de réception 18. La deuxième bague intérieure 12 s'étend axialement depuis une première surface de butée axiale 26 faisant face au côté proximal 8 en direction du côté distal 9, sur environ une moitié distale de la longueur axiale du roulement 7.

La surface extérieure 25 définit un deuxième chemin de roulement 28 distal.

La deuxième bague intérieure 12 comporte une surface d'extrémité distale 29. La surface intérieure 24 de la deuxième bague intérieure 11 comprend un épaulement 30 de pré-chargement. L'épaulement 30 comprend une surface cylindrique 31 s'étendant depuis la surface d'extrémité distale 29 en direction de l'extrémité proximale, une surface de butée axiale 32 faisant face au côté distal 9, et s'étendant depuis la surface cylindrique 31 jusqu'à la surface cylindrique de réception 18.

La bague extérieure 13 comprend une surface intérieure 33 et une surface extérieure 34 opposée à la surface intérieure 33. La surface extérieure 34 est utilisée pour le montage du roulement 7 sur le boîtier. La bague extérieure 13 s'étend axialement depuis le côté proximal 8 jusqu'au côté distal 9, sur la totalité de la longueur axiale du roulement 7.

Dans la moitié proximale du roulement 7, la surface intérieure 33 définit un deuxième chemin de roulement 35 proximal. Dans la moitié distale du roulement 7, la surface intérieure 33 définit un deuxième chemin de roulement 36 distal.

La bague extérieure 11 comporte une surface d'extrémité proximale 37 et une surface d'extrémité distale 38 opposée. La surface extérieure 34 comprend un épaulement 39 d'assemblage au boîtier. L'épaulement 39 comprend une surface cylindrique 40 s'étendant depuis la surface d'extrémité distale 38 en direction de l'extrémité proximale, une surface de butée axiale 41 faisant face au côté distal 9, et s'étendant depuis la surface cylindrique 40 jusqu'à une deuxième surface cylindrique 42. La deuxième surface cylindrique 42 s'étend depuis la surface de butée axiale 41 jusqu'à la surface d'extrémité proximale 37.

Un espace intérieur unique 43 est défini entre la surface intérieure 33 de la bague extérieure 13 et la surface extérieure 15, 25 des première et deuxième bagues intérieures 11, 12, l'espace intérieur unique 43 s'étendant entre une extrémité proximale 44 où il est fermé par un système d'étanchéité proximal 45 entre la bague extérieure 13 et la première bague intérieure 11 et une extrémité distale 46 où il est fermé par un système d'étanchéité distal 47 entre la bague extérieure 13 et la deuxième bague intérieure 12.

Au niveau de l'espace intérieur unique 43, les premiers chemins de roulement extérieur et intérieur proximaux 23, 35 se font face, et les deuxièmes chemins de roulement extérieur et intérieur distaux 28, 36 se font face.

Une première rangée proximale de corps roulants 48 est montée dans l'espace intérieur unique, roulants sur les premiers chemins de roulement extérieur et intérieur proximaux 23, 35. Une deuxième rangée distale de corps roulants 49 est montée dans l'espace intérieur unique, roulants sur les deuxièmes chemins de roulement extérieur et intérieur distaux 28, 36. Les première et deuxième rangées de corps roulants 48, 49 sont espacées l'une de l'autre selon l'axe longitudinal B.

Les corps roulants d'une même rangée sont le cas échéant espacés les uns des autres par une cage 50, comme représentée sur la figure 2 pour la rangée proximale.

Le roulement 7, comprend un système de chargement 51 adapté pour maintenir la deuxième bague intérieure 12 axialement en butée contre la première bague intérieure 11.

Le système de chargement 51 comprend une plaque annulaire 52 présentant une surface d'appui 53 en contact avec la deuxième bague intérieure 12 et sollicitant la deuxième bague intérieure 12 dans le sens axial, la plaque annulaire 52 étant maintenue solidaire de la première bague intérieure 11 par vissage à l'aide de vis 54. Plus précisément, la plaque 52 est vissée sur la bague intérieure 51 par des vis traversant des alésages 55 de la plaque 52 et des alésages 56 de la première bague intérieure 11 mis en correspondance avec les alésages 55. La surface d'appui 53 appuie sur la surface de butée axiale 32, sollicitant ainsi la deuxième bague intérieure 12 en direction du côté proximal, ces efforts de serrage se retrouvant au niveau du contact entre la surface de butée axiale 17 de la première bague intérieure 11 et la surface de butée axiale 26 de la deuxième bague intérieure 12. Les vis sont serrées jusqu'à appliquer une force de chargement $F_{précharge}$.

Les conditions décrites ci-dessous apparaissent favorables pour permettre un fonctionnement d'un roulement de masse réduite dans un encombrement réduit. Selon les applications, l'encombrement (notamment l'encombrement axial, c'est-à-dire selon l'axe du roulement), la masse et le niveau de performance requis peuvent varier. Toutefois, le roulement conforme à l'une et/ou l'autre des spécificités ci-dessous est considéré avantageux pour répondre à ces problématiques.

La distance $E_p$, normale à la direction longitudinale B, entre la surface intérieure 14 de la première bague intérieure 11 et la surface 18 de réception de la deuxième bague intérieure 12 au droit de celle-ci peut être définie par

$$E_p = \sqrt{\frac{4 * Sf * F_{précharge}}{0,9 * \pi * N * Re}} + \beta$$

, où

$E_p$ correspond à la distance, normalement à la direction longitudinale, entre la surface intérieure de la première bague intérieure et la surface intérieure de la deuxième bague intérieure au droit de celle-ci,
$F_{précharge}$ est la force par laquelle la deuxième bague intérieure 12 est maintenue axialement en butée contre la première bague intérieure 11,
Re est la limite élastique du matériau des vis,
N est le nombre de vis utilisées pour appliquer la force de précharge,
Sf est un paramètre de sécurité dépendant de l'application, compris entre 1,2 et 4,
$\beta$ est un paramètre compris entre 4 et 5.

En particulier, N peut être choisi comme l'entier le plus proche, ou l'entier immédiatement supérieur à $(\pi*d_{arbre})/(3,8*d_{vis})$,
Où $d_{vis}$ est le diamètre des vis.
Cette définition permet d'assurer l'application d'une force de précharge suffisante sans endommagement du roulement, et dans un encombrement limité.
La définition ci-dessus peut s'appliquer notamment dans le cas de petits roulements, si la taille de la tête de vis a une influence.
En variante, la distance $E_p$, normale à la direction longitudinale B, entre la surface intérieure 14 de la première bague intérieure 11 et la surface 18 de réception de la deuxième bague intérieure 12 au droit de celle-ci peut être à la fois supérieur à 5 millimètres (mm) et être définie par

$$E_p = \gamma \sqrt{\frac{4 * Sf * F_{précharge}}{0,9 * \pi * N * Re}}$$

, où

$E_p$ correspond à la distance, normalement à la direction longitudinale, entre la surface intérieure de la première bague intérieure et la surface intérieure de la deuxième bague intérieure au droit de celle-ci,
$F_{précharge}$ est la force par laquelle la deuxième bague intérieure est maintenue axialement en butée contre la première bague intérieure,
Re est la limite élastique du matériau des vis,
N est le nombre de vis utilisées pour appliquer la force de précharge,
Sf est un paramètre de sécurité dépendant de l'application, compris entre 1,2 et 4,
$\gamma$ est un coefficient pondérateur compris entre 1 et 1,8.

En particulier, N peut être choisi comme l'entier le plus proche, ou l'entier immédiatement supérieur à $(\pi*d_{arbre})/(3,8*d_{vis})$,
Où $d_{vis}$ est le diamètre des vis.
La définition ci-dessus peut s'appliquer notamment dans le cas de grands roulements, si la taille de la tête de vis n'a pas d'influence.
L'épaulement 39 d'assemblage au boîtier, en particulier la surface de butée axiale 41 de celui-ci, prévu sur la surface extérieure 34 de la bague extérieure 13 unique, est disposé axialement (selon la direction (B)) entre les premières et deuxième rangées de corps roulants, c'est-à-dire sensiblement au milieu, axialement, de la longueur du roulement 7.
L'épaulement 20 d'assemblage au pied de pale, prévu sur la surface intérieure 14 de la première bague intérieure 12 est disposé plus proximal que la première rangée proximale 48 de corps roulants.
Ainsi, les efforts axiaux subis par le roulement sont essentiellement pris en charge par la première rangée proximale 48 de corps roulants. On a ainsi prévu un roulement dissymétrique, la deuxième rangée distale de corps roulants n'étant pas dimensionnée pour prendre en charge les efforts axiaux subis par le roulement autant que la première rangée proximale de corps roulants.
La hauteur He de l'épaulement d'assemblage au boîtier, c'est-à-dire de la surface de butée axiale 41 est définie manière à répondre aux conditions suivantes :

$$10 < \Phi1 / 2*He < 25,$$

où $\Phi1$ correspond au diamètre extérieur de la bague extérieure 13 au niveau de la première rangée, 48, proximale, de corps roulants.
Dans l'exemple présenté ci-dessus, les corps roulants de la première rangée, proximale, de corps roulants, sont des troncs de cône disposés avec le diamètre maximal $d_{max}$ du côté proximal. L'axe des corps roulants de la première rangée, proximale, de corps roulants forme avec la direction longitudinale (B) un angle compris entre 35° et 45°, le diamètre minimal du tronc de cône étant plus proche de l'axe B que le diamètre maximal. Ainsi, l'axe des corps roulants 48 est sensiblement orthogonal à l'axe d'application des efforts entre la surface de butée axiale 22 et la surface de butée axiale 41. Cette configuration permet d'obtenir un taux élevé de transfert de charge axiale entre la pale et le boitier.
La distance (Ebe) entre le premier chemin de roulement extérieur proximal 35 et l'épaulement 41 d'assemblage à un boitier, mesurée perpendiculairement au premier chemin de roulement extérieur proximal 35, est au moins égale à $\delta_r*d_{max}$, où $\delta_r$ est un paramètre de sécurité compris entre 1 et 1,5, et $d_{max}$ est le diamètre maxi-

mal des corps roulants de la première rangée, proximale, de corps roulants. Ce dimensionnement permet d'assurer la transmission des efforts axiaux entre les corps roulants et le boîtier, à faible risque d'endommager le roulement, et à faible encombrement.

La distance (Ebi1) entre le premier chemin de roulement intérieur proximal 23 et l'épaulement 20 d'assemblage à un pied de pale, mesurée perpendiculairement au premier chemin de roulement intérieur proximal 23, est au moins égale à $\eta_{1r}*(d_{arbre})^{n1r}$, où $\eta_{1r}$ est un paramètre au moins égal à 0,4, $d_{arbre}$ désigne le diamètre intérieur de la surface intérieure 14 de la première bague intérieure 12, et n1r est un paramètre compris entre 0,4 et 0,5. Ce dimensionnement permet d'assurer la transmission des efforts axiaux entre la pale et les corps roulants, à faible risque d'endommager le roulement, et à faible encombrement.

Selon ce mode de réalisation, les corps roulants 49 de la deuxième rangée, distale, de corps roulants, sont des troncs de cône disposés avec le diamètre maximal du côté distal. L'axe des corps roulants 49 de la deuxième rangée, distale, de corps roulants forme avec la direction longitudinale (B) un angle compris entre 17° et 23°, le diamètre minimal du tronc de cône étant plus proche de l'axe B que le diamètre maximal

La distance (Ebi2) entre le deuxième chemin de roulement intérieur distal 28 et le siège distal 16 de la surface extérieure 15 de la première bague intérieure 12, mesurée perpendiculairement au siège distal 16, est au moins égale à $\eta_{2r}*(d_{arbre2})^{n2r}$, où $\eta_{2r}$ est un paramètre au moins égal à 0,4, $d_{arbre2}$ désigne le diamètre intérieur de la surface intérieure 24 de la deuxième bague intérieure, et n2r est un paramètre compris entre 0,4 et 0,5. Cette géométrie permet d'assurer une transmission d'efforts suffisants à faible encombrement.

Le cas échéant, $\eta_{1r} = n_{2r}$.

Le cas échéant, n1r = n2r.

La distance e, mesurée selon la direction longitudinale (B), entre le premier chemin de roulement extérieur 35 proximal et le deuxième chemin de roulement extérieur distal 36 est compris entre 0,4*l1 et l1, où l1 désigne la longueur des corps roulants 48 de la première rangée, proximale, de corps roulants. Grace à cette disposition, la compacité axiale du roulement est conservée, et le roulement 7 supporte les importants moments de flexion en cours de l'utilisation.

Dans l'exemple ci-dessus, les corps roulants des deux rangées de corps roulants présentent le même type de géométrie.

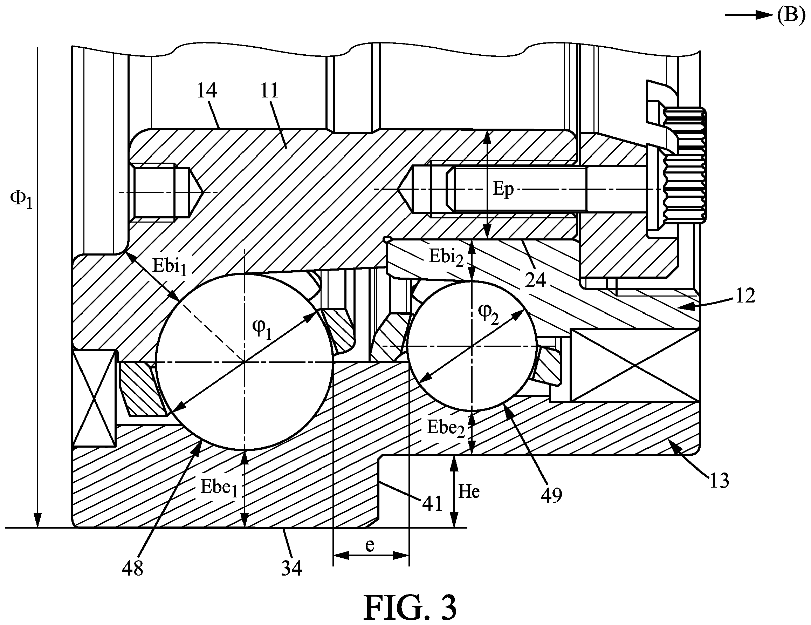

Selon un deuxième mode de réalisation, tel que représenté sur la figure 3, les corps roulants de la première rangée 48, proximale, de corps roulants, sont des billes de diamètre $\varphi1$. L'axe des efforts appliqués aux corps roulants de la première rangée 48, proximale, de corps roulants forme avec la direction longitudinale un angle compris entre 25° et 35°.

La distance radiale (Ebe1) depuis la surface extérieure de la bille de la première rangée 48, proximale, de corps roulants jusqu'à la surface extérieure 34 de la bague extérieure 13 est au moins égal à $\delta_{1eb}*\varphi_1$, où $\delta_{1eb}$ est un paramètre de sécurité supérieur à 0,45, et $\varphi_1$ est le diamètre des billes de la première rangée 48, proximale, de corps roulants. La distance Ebe1 est supérieure à 8 millimètres (mm).

La distance radiale (Ebi1) depuis la surface extérieure de la bille de la première rangée 48, proximale, de corps roulants jusqu'à la surface intérieure 14 de la première bague intérieure 11 est au moins égal à $\delta_{1ib}*\varphi_1$, où $\delta_{1ib}$ est un paramètre de sécurité supérieur à 0,45, et $\varphi_1$ est le diamètre des billes de la première rangée 48, proximale, de corps roulants. La distance Ebi1 est supérieure à 8 millimètres (mm).

Le cas échéant, $\delta_{1ib} = \delta_{1eb}$.

Selon ce mode de réalisation, les corps roulants de la deuxième rangée 49, distale, de corps roulants, sont des billes, de diamètre $\varphi2$. L'axe des efforts appliqués aux corps roulants de la deuxième rangée 49, distale, de corps roulants forme avec la direction longitudinale un angle compris entre 15° et 25°.

La distance radiale (Ebe2) depuis la surface extérieure de la bille de la deuxième rangée 49, distale, de corps roulants et la surface extérieure 34 de la bague extérieure 13 est au moins égal à $\delta_{2eb}*\varphi_2$, où $\delta_{2eb}$ est un paramètre de sécurité supérieur à 0,4, et $\varphi_2$ est le diamètre des billes de la deuxième rangée 49, distale, de corps roulants, et dans lequel ladite distance (Ebe2) est supérieure à 6 millimètres (mm). Cette géométrie permet d'assurer une transmission d'efforts suffisants à faible encombrement.

La distance radiale (Ebi2) depuis la surface extérieure de la bille de la deuxième rangée 49, distale, de corps roulants et la surface intérieure 24 de la deuxième bague intérieure 12 est au moins égal à $\delta_{2ib}*\varphi_2$, où $\delta_{2ib}$ est un paramètre de sécurité supérieur à 0,4, et $\varphi_2$ est le diamètre des billes de la deuxième rangée 49, distale, de corps roulants, et dans lequel ladite distance (Ebi2) est supérieure à 6 millimètres (mm).

Le cas échéant, $\delta_{2ib} = \delta_{2eb}$.

La distance (e), mesurée sur la bague extérieure 13 selon la direction longitudinale (B), entre les billes de la première rangée 48 de corps roulants et les billes de la deuxième rangée 49 de corps roulants est supérieure à $(\varphi1 + \varphi2)/v$, où $\varphi1$ désigne le diamètre des billes de la première rangée 48 de corps roulants, $\varphi_2$ désigne le diamètre des billes de la deuxième rangée 49 de corps roulants, et v est un paramètre compris entre 2 et 4,2.

**Revendications**

1. Roulement d'un pied d'une pale s'étendant selon une direction longitudinale (B) entre une extrémité proximale et une extrémité distale, le roulement autorisant une oscillation du pied autour d'un axe (B) s'étendant selon la direction longitudinale par rapport à un boîtier,

Le roulement comprenant :

- Une bague extérieure (13) unique présentant une surface intérieure (33) et une surface extérieure (34) opposée à la surface intérieure (33), la surface intérieure (33) de la bague extérieure (13) présentant un premier chemin de roulement extérieur proximal (35) et un deuxième chemin de roulement extérieur distal (36), les premier et deuxième chemins de roulement extérieurs (35, 36) étant décalés l'un par rapport à l'autre selon la direction longitudinale (B),

- Une première bague intérieure (11) présentant une surface intérieure (14) et une surface extérieure (15) opposée à la surface intérieure (14), la surface extérieure (15) de la première bague intérieure (11) présentant un premier chemin de roulement intérieur proximal (23) et un siège distal (16), le premier chemin de roulement intérieur (23) et le siège (16) étant décalés l'un par rapport à l'autre selon la direction longitudinale (B),

- Une deuxième bague intérieure (12) présentant une surface intérieure (24) et une surface extérieure (25) opposée à la surface intérieure (24), la surface extérieure (25) de la deuxième bague intérieure (12) présentant un deuxième chemin de roulement intérieur distal (28), la deuxième bague intérieure (12) étant emmanchée sur le siège (16) et étant maintenue axialement en butée contre la première bague intérieure (11),

Un espace intérieur (43) unique étant défini entre la surface intérieure (33) de la bague extérieure (13) et la surface extérieure (15, 25) des première et deuxième bagues intérieures (11, 12), l'espace intérieur (43) unique s'étendant entre une extrémité proximale (44) où il est fermé par un système d'étanchéité proximal (45) entre la bague extérieure (13) et la première bague intérieure (11) et une extrémité distale (46) où il est fermé par un système d'étanchéité distal (47) entre la bague extérieure (13) et la deuxième bague intérieure (12),

- Une première rangée proximale de corps roulants (48) montés dans l'espace intérieur (43) unique, roulants sur les premiers chemins de roulement intérieur et extérieur proximaux (23, 35) et une deuxième rangée distale de corps roulants (49) montés dans l'espace intérieur (43) unique, roulants sur les deuxièmes chemins de roulement extérieur et intérieur distaux (36, 28), les première et deuxième rangées de corps roulants (48, 49) étant espacées l'une de l'autre selon l'axe longitudinal (B),

- La surface intérieure (14) de la première bague intérieure (11) comprenant un épaulement (20) d'assemblage à un pied de pale,

- La surface extérieure (34) de la bague extérieure (13) unique comprenant un épaulement (39) d'assemblage à un boîtier,

**caractérisé en ce que** le roulement comprend en outre un système de chargement (51) adapté pour maintenir la deuxième bague intérieure (12) axialement en butée contre la première bague intérieure (11), le système de chargement (51) comprenant une plaque annulaire (52) présentant une surface d'appui (53) en contact avec la deuxième bague intérieure (12) et sollicitant la deuxième bague intérieure (12) dans le sens axial, la plaque annulaire (52) étant maintenue solidaire de la première bague intérieure (11) par vissage à l'aide de vis, les vis étant serrées jusqu'à appliquer une force de chargement $F_{précharge}$,

et dans lequel la distance Ep, normalement à la direction longitudinale, entre la surface intérieure (14) de la première bague intérieure (11) et la surface de réception (18) de la deuxième bague intérieure (12) au droit de celle-ci est définie par

$$E_p = \sqrt{\frac{4 * Sf * F_{précharge}}{0{,}9 * \pi * N * Re} + \beta}$$

, où

$E_p$ correspond à la distance, normalement à la direction longitudinale, entre la surface intérieure (14) de la première bague intérieure (11) et la surface de réception (18) de la deuxième bague intérieure (12) au droit de celle-ci,

$F_{précharge}$ est la force par laquelle la deuxième bague intérieure (12) est maintenue axialement en butée contre la première bague intérieure (11),

Re est la limite élastique du matériau des vis (54),

N est le nombre de vis (54) utilisées pour appliquer ladite force,

Sf est un paramètre de sécurité compris entre 1,2 et 4,

β est un paramètre compris entre 4 et 5 ;

**Ou** dans lequel la distance Ep, normalement à la direction longitudinale, entre la surface intérieure (14) de la première bague intérieure (11) et la surface de réception (18) de la deuxième bague intérieure (12) au droit de celle-ci est supérieur à 5 et est définie par

$$E_p = \gamma \sqrt{\frac{4 * Sf * F_{précharge}}{0{,}9 * \pi * N * Re}}$$

, où $E_p$ correspond à la distance, normalement à la direction longitudinale, entre la surface intérieure (14) de la première bague intérieure (11) et la surface de réception (18) de la deuxième bague intérieure (12) au droit de celle-ci,

$F_{précharge}$ est la force par laquelle la deuxième bague intérieure (12) est maintenue axialement en butée contre la première bague intérieure (11),

Re est la limite élastique du matériau des vis (54),

N est le nombre de vis (54) utilisées pour appliquer ladite force,

Sf est un paramètre de sécurité compris entre 1,2 et 4,

$\gamma$ est un coefficient pondérateur compris entre 1 et 1,8 ;

dans lequel, optionnellement, N est l'entier le plus proche, ou l'entier immédiatement supérieur à $(\pi*d_{arbre})/(3,8*d_{vis})$, où $d_{arbre}$ est le diamètre intérieur de la première bague intérieure (11),

$d_{vis}$ est le diamètre des vis (54).

2. Roulement d'un pied d'une pale selon la revendication 1, comprenant en outre l'une et/ou l'autre des dispositions suivantes :

- l'épaulement (39) d'assemblage prévu sur la surface extérieure (34) de la bague extérieure (13) unique est disposé axialement entre les premières et deuxième rangées de corps roulants (48, 49) ;
- l'épaulement (20) d'assemblage prévu sur la surface intérieure (14) de la première bague intérieure (11) est disposé plus proximal que la première rangée proximale de corps roulants (48).

3. Roulement d'un pied d'une pale selon l'une des revendications 1 à 2, dans lequel les corps roulants des deux rangées de corps roulants (48, 49) présentent le même type de géométrie.

4. Roulement d'un pied d'une pale selon l'une des revendications 1 à 3, dans lequel les corps roulants de la première rangée, proximale, de corps roulants (48), sont des troncs de cône disposés avec le diamètre maximal du côté proximal.

5. Roulement d'un pied d'une pale selon la revendication 4, comprenant en outre l'une et/ou l'autre des caractéristiques suivantes :

- la distance (Ebe) entre le premier chemin de roulement extérieur proximal (35) et l'épaulement (39) d'assemblage à un boitier est au moins égal à $\delta_r*d_{max}$, où $\delta_r$ est un paramètre de sécurité compris entre 1 et 1,5, et $d_{max}$ est le diamètre maximal des corps roulants de la première rangée, proximale, de corps roulants (35) ;
- la distance (Ebi1) entre le premier chemin de roulement intérieur proximal (23) et l'épaulement (20) d'assemblage à un pied de pale est au moins égal à $\eta_{1r}*(d_{arbre})^{n1r}$, où $\eta_{1r}$ est un paramètre au moins égal à 0,4, $d_{arbre}$ désigne le diamètre intérieur de la surface intérieure (14) de la première bague intérieure (11), et n1r est un paramètre compris entre 0,4 et 0,5 ;
- l'axe des corps roulants de la première rangée, proximale, de corps roulants (48) forme avec la direction longitudinale un angle compris entre 35° et 45°, le diamètre minimal du tronc de cône étant plus proche de l'axe (B) que le diamètre maximal.

6. Roulement d'un pied d'une pale selon l'une des revendications 1 à 5, dans lequel les corps roulants de la deuxième rangée, distale, de corps roulants (49), sont des troncs de cône disposés avec le diamètre maximal du côté distal.

7. Roulement d'un pied d'une pale selon la revendication 6 et selon l'une des revendications 4 à 5, dans lequel la distance (e), mesurée selon la direction longitudinale (B), entre le premier chemin de roulement extérieur proximal (35) et le deuxième chemin de roulement extérieur distal (36) est compris entre $0,4*l1$ et l1, où l1 désigne la longueur des corps roulants de la première rangée, proximale, de corps roulants (48).

8. Roulement d'un pied d'une pale selon la revendication 6 ou 7, comprenant en outre l'une et/ou l'autre des caractéristiques suivantes :

- la distance (Ebi2) entre le deuxième chemin de roulement intérieur distal (28) et la surface intérieure (24) de la deuxième bague intérieure (12) est au moins égale à $\eta_{2r}*(d_{arbre2})^{n2r}$, où $\eta_{2r}$ est un paramètre au moins égal à 0,4, $d_{arbre2}$ désigne le diamètre intérieur de la surface intérieure (14) de la première bague intérieure (11), et n2r est un paramètre compris entre 0,4 et 0,5 ;
- l'axe des corps roulants de la deuxième rangée, distale, de corps roulants (49) forme avec la direction longitudinale un angle compris entre 17° et 23°, le diamètre minimal du tronc de cône étant plus proche de l'axe (B) que le diamètre maximal.

9. Roulement d'un pied d'une pale selon l'une des revendications 1 à 4, dans lequel les corps roulants de la première rangée, proximale, de corps roulants (48), sont des **billes,**
Et comprenant optionnellement en outre l'une et/ou l'autre des caractéristiques suivantes :

- la distance radiale (Ebe1) depuis la surface extérieure de la bille de la première rangée, proximale, de corps roulants (48) jusqu'à la surface extérieure (34) de la bague extérieure (13) est au moins égale à $\delta_{1eb}{}^*\varphi_1$, où $\delta_{1eb}$ est un paramètre de sécurité supérieur à 0,45, et $\varphi_1$ est le diamètre des billes de la première rangée, proximale, de corps roulants (48), et dans lequel ladite distance (Ebe1) est supérieure à 8 millimètres (mm) ;

- la distance radiale (Ebi1) depuis la surface extérieure de la bille de la première rangée, proximale, de corps roulants (48) jusqu'à la surface intérieure (14) de la première bague intérieure (11) est au moins égal à $\delta_{1ib}{}^*\varphi_i$, où $\delta_{1ib}$ est un paramètre de sécurité supérieur à 0,45, et $\varphi_1$ est le diamètre des billes de la première rangée, proximale, de corps roulants (48), et dans lequel ladite distance (Ebe1) est supérieure à 8 millimètres (mm) ;

- l'axe des efforts appliqués aux corps roulants de la première rangée, proximale, de corps roulants (48) forme avec la direction longitudinale un angle compris entre 25° et 35°.

10. Roulement d'un pied d'une pale selon l'une des revendications 1 à 4 ou 9, dans lequel les corps roulants de la deuxième rangée, distale, de corps roulants (49), sont des billes,

Et comprenant en outre optionnellement l'une et/ou l'autre des caractéristiques suivantes :

- la distance radiale (Ebe2) depuis la surface extérieure de la bille de la deuxième rangée, distale, de corps roulants (49) jusqu'à la surface extérieure (34) de la bague extérieure (13) est au moins égale à $\delta_{2eb}{}^*\varphi_2$, où $\delta_{2eb}$ est un paramètre de sécurité supérieur à 0,4, et $\varphi_2$ est le diamètre des billes de la deuxième rangée, distale, de corps roulants (49), et dans lequel ladite distance (Ebe2) est supérieure à 6 millimètres (mm) ;

- la distance radiale (Ebi2) depuis la surface extérieure de la bille de la deuxième rangée, distale, de corps roulants (49) jusqu'à la surface intérieure (24) de la deuxième bague intérieure (12) est au moins égale à $\delta_{2eb}{}^*\varphi_2$ où $\delta_{2eb}$ est un paramètre de sécurité supérieur à 0,4, et $\varphi_2$ est le diamètre des billes de la deuxième rangée, distale, de corps roulants (49), et dans lequel ladite distance (Ebi2) est supérieure à 6 millimètres (mm) ;

- et la distance, mesurée selon la direction longitudinale, entre les billes de la première rangée de corps roulants (48) et les billes de la deuxième rangée de corps roulants (49) est supérieure à $(\varphi 1 + \varphi 2)/v$, où $\varphi 1$ désigne le diamètre des billes de la première rangée de corps roulants (48), $\varphi 2$ désigne le diamètre des billes de la deuxième rangée de corps roulants (49), et v est un paramètre compris entre 2 et 4,2 ;

- l'axe des efforts appliqués aux corps roulants de la deuxième rangée, distale, de corps roulants (49) forme avec la direction longitudinale un angle compris entre 15° et 25°.

11. Roulement d'un pied d'une pale selon l'une des revendications 1 à 10, dans lequel la hauteur (He) de l'épaulement (39) d'assemblage au boîtier est définie manière à répondre aux conditions suivantes :

$$10 < \Phi1 / 2{*}He < 25,$$

où $\Phi1$ correspond au diamètre extérieur de la bague extérieure (13) au niveau de la première rangée proximale de corps roulants (48).

12. **Système oscillant** comprenant un roulement (7) selon l'une quelconque des revendications 1 à 11, un boîtier (5) assemblé à l'épaulement (39) d'assemblage à un boîtier de la surface extérieure (34) de la bague extérieure (13) unique, une pale (4) comprenant un pied de pale (4a) assemblé à l'épaulement (20) d'assemblage à un pied de pale de la surface intérieure (14) de la première bague intérieure (11), la pale (4) étant montée oscillante autour dudit axe (B) s'étendant selon la direction longitudinale par rapport au boîtier (5) par l'intermédiaire du roulement (7).

13. Système tournant autour d'un axe de rotation, le système comprenant au moins un système oscillant selon la revendication 12 s'étendant radialement par rapport à l'axe de rotation (A), le roulement (7) étant distant de l'axe de rotation (A).

**Patentansprüche**

1. Rolllager für einen Fuß eines Schaufelblatts, welches sich entlang einer longitudinalen Richtung (B) zwischen einem proximalen Ende und einem distalen Ende erstreckt, wobei das Rolllager eine Oszillation des Fußes um eine Achse (B) ermöglicht, welche sich entlang der longitudinalen Richtung bezüglich eines Gehäuses erstreckt,

wobei das Rolllager umfasst:

- einen einzelnen äußeren Ring (13), welcher eine innere Fläche (33) und eine äußere Fläche (34) gegenüber der inneren Fläche (33) aufweist, wobei die innere Fläche (33) des äußeren Rings (13) einen ersten proximalen äußeren Rollweg und einen zweiten distalen äußeren Rollweg (36) aufweist, wobei die ersten und zweiten äußeren Rollwege (35, 36) gegeneinander entlang der longitudinalen Richtung (B) versetzt sind,

- einen ersten inneren Ring (11), welcher eine innere Fläche (14) und eine äußere Fläche (15) gegenüber der inneren Fläche (14) aufweist, wobei die äußere Fläche (15) des ersten inneren Rings (11) einen ersten proximalen inneren Rollweg (23) und einen distalen Sitz (16) aufweist, wobei der erste innere Rollweg (23) und der Sitz (16) gegeneinander entlang der longitudinalen Richtung (B) versetzt sind,

- einen zweiten inneren Ring (12), welcher eine innere Fläche (24) und eine äußere Fläche (25) gegenüber der inneren Fläche (24) aufweist, wobei die äußere Fläche (25) des zweiten inneren Rings (12) einen zweiten distalen inneren Rollweg (28) aufweist, wobei der zweite innere Ring (12) an dem Sitz (16) eingepasst ist und axial in Anlage gegen den ersten inneren Ring (11) gehalten ist,

wobei ein einzelner innerer Raum (43) zwischen der inneren Fläche (33) des äußeren Rings (13) und der äußeren Fläche (15, 25) der ersten und zweiten inneren Ringe (11, 12) definiert ist, wobei sich der einzelne innere Raum (43) zwischen einem proximalen Ende (44), wo er durch ein proximales Dichtungssystem (45) zwischen dem äußeren Ring (13) und dem ersten inneren Ring (11) geschlossen ist, und einem distalen Ende (46) erstreckt, wo er durch ein distales Dichtungssystem (47) zwischen dem äußeren Ring (13) und dem zweiten inneren Ring (12) geschlossen ist,

- eine erste proximale Reihe von Rollkörpern (48), welche in dem einzelnen inneren Raum (43) an den ersten proximalen inneren und äußeren Rollwegen (23, 35) rollend montiert sind, und eine zweite distale Reihe von Rollkörpern (49), welche in dem einzelnen inneren Raum (43) an den zweiten distalen äußeren und inneren Rollwegen (36, 28) rollend montiert sind, wobei die ersten und zweiten Reihen von Rollkörpern (48, 49) voneinander entlang der longitudinalen Achse (B) beabstandet sind,

- wobei die innere Fläche (14) des ersten inneren Rings (11) einen Montageansatz (20) an einen Schaufelblatt-Fuß umfasst,

- wobei die äußere Fläche (34) des einzelnen äußeren Rings (13) einen Montageansatz (39) an ein Gehäuse umfasst,

**dadurch gekennzeichnet, dass** das Rolllager ferner ein Lastsystem (51) umfasst, welches dazu eingerichtet ist, den zweiten inneren Ring (12) axial in Anlage gegen den ersten inneren Ring (11) zu halten, wobei das Lastsystem (51) eine ringförmige Platte (52) umfasst, welche eine Auflagefläche (53) in Kontakt mit dem zweiten inneren Ring (12) und den zweiten inneren Ring (12) in dem axialen Sinn schiebend aufweist, wobei die ringförmige Platte (52) verbunden mit dem ersten inneren Ring (11) durch eine Verschraubung mit Hilfe von Schrauben gehalten wird, wobei die Schrauben angezogen werden, bis sie eine Lastkraft $F_{précharge}$ ausüben, und wobei der Abstand Ep, normal zu der longitudinalen Richtung, zwischen der inneren Fläche (14) des ersten inneren Rings (11) und der Aufnahmefläche (18) des zweiten inneren Rings (12) seitlich davon, definiert ist durch:

$$E_p = \sqrt{\frac{4 * Sf * F_{précharge}}{0,9 * \pi * N * Re}} + \beta$$

wobei $E_p$ dem Abstand, normal zu der longitudinalen Richtung, zwischen der inneren Fläche (14) des ersten inneren Rings (11) und der Aufnahmefläche (18) des zweiten inneren Rings (12) seitlich davon entspricht, $F_{précharge}$ die Kraft ist, durch welche der zweite innere Ring (12) axial in Anlage gegen den ersten inneren Ring (11) gehalten wird, Re die Streckgrenze des Materials der Schrauben (54) ist, N die Anzahl der Schrauben (54) ist, welche verwendet werden, um die Kraft auszuüben, Sf ein Sicherheitsparameter ist, welcher zwischen 1,2 und 4 beträgt, β ein Parameter ist, welcher zwischen 4 und 5 beträgt;

oder wobei der Abstand Ep, normal zu der longitudinalen Richtung, zwischen der inneren Fläche (14) des ersten inneren Rings (11) und der Aufnahmefläche (18) des zweiten inneren Rings (12) seitlich davon größer als 5 ist und definiert ist durch:

$$E_p = \gamma \sqrt{\frac{4 * Sf * F_{précharge}}{0,9 * \pi * N * Re}}$$

wobei $E_p$ dem Abstand, normal zu der longitudinalen Richtung, zwischen der inneren Fläche (14) des ersten inneren Rings (11) und der Aufnahmefläche (18) des zweiten inneren Rings (12) seitlich davon entspricht, $F_{précharge}$ die Kraft ist, durch welche der zweite innere Ring (12) axial in Anlage gegen den ersten inneren Ring (11) gehalten wird, Re die Streckgrenze des Materials der Schrauben (54) ist, N die Anzahl der Schrauben (54) ist, welche verwendet werden, um die Kraft auszuüben,

Sf ein Sicherheitsparameter ist, welcher zwischen 1,2 und 4 beträgt,

$\gamma$ ein Ausgleichskoeffizient ist, welcher zwischen 1 und 1,8 beträgt;

wobei optional N die nächste Ganzzahl oder die Ganzzahl unmittelbar größer als $(\pi*d_{arbre})/(3,8*d_{vis})$ ist, wobei

$d_{arbre}$ der innere Durchmesser des ersten inneren Rings (11) ist,

$d_{vis}$ der Durchmesser der Schrauben (54) ist.

2. Rolllager für einen Fuß eines Schaufelblatts nach Anspruch 1, ferner umfassend die eine und/oder die andere der folgenden Einrichtungen:

   - der Montageansatz (39), welcher an der äußeren Fläche (34) des einzelnen äußeren Rings (13) vorgesehen ist, ist axial zwischen den ersten und zweiten Reihen von Rollkörpern (48, 49) angeordnet;
   - der Montageansatz (20), welcher an der inneren Fläche (14) des ersten inneren Rings (11) vorgesehen ist, ist proximaler als die erste proximale Reihe von Rollkörpern (48) angeordnet.

3. Rolllager für einen Fuß eines Schaufelblatts nach einem der Ansprüche 1 bis 2, wobei die Rollkörper der beiden Reihen von Rollkörpern (48, 49) denselben Typ von Geometrie aufweisen.

4. Rolllager für einen Fuß eines Schaufelblatts nach einem der Ansprüche 1 bis 3, wobei die Rollkörper der ersten proximalen Reihe von Rollkörpern (48) Kegelstümpfe sind, welche mit dem maximalen Durchmesser an der proximalen Seite angeordnet sind.

5. Rolllager für einen Fuß eines Schaufelblatts nach Anspruch 4, ferner umfassend die eine und/oder die andere der folgenden Charakteristiken:

   - der Abstand (Ebe) zwischen dem ersten proximalen äußeren Rollweg (35) und dem Montageansatz (39) an ein Gehäuse ist wenigstens gleich $\delta_r*d_{max}$, wobei $\delta_r$ ein Sicherheitsparameter ist, welcher zwischen 1 und 1,5 beträgt, und $d_{max}$ der maximale Durchmesser der Rollkörper der ersten proximalen Reihe von Rollkörpern (35) ist;
   - der Abstand (Ebi1) zwischen dem ersten proximalen inneren Rollweg (23) und dem Montageansatz (20) an einen Schaufelblatt-Fuß ist wenigstens gleich $\eta_{1r}*(d_{arbre})^{n1r}$, wobei $\eta_{1r}$ ein Parameter wenigstens gleich 0,4 ist, $d_{arbre}$ den inneren Durchmesser der inneren Fläche (14) des ersten inneren Rings (11) bezeichnet, und n1r ein Parameter ist, welcher zwischen 0,4 und 0,5 beträgt;

   - die Achse der Rollkörper der ersten proximalen Reihe von Rollkörpern (48) bildet mit der longitudinalen Richtung einen Winkel, welcher zwischen 35° und 45° beträgt, wobei der minimale Durchmesser des Kegelstumpfs näher an der Achse (B) ist als der maximale Durchmesser.

6. Rolllager für einen Fuß eines Schaufelblatts nach einem der Ansprüche 1 bis 5, wobei die Rollkörper der zweiten distalen Reihe von Rollkörpern (49) Kegelstümpfe sind, welche mit dem maximalen Durchmesser an der distalen Seite angeordnet sind.

7. Rolllager für einen Fuß eines Schaufelblatts nach Anspruch 6 und nach einem der Ansprüche 4 bis 5, wobei der Abstand (e), gemessen entlang der longitudinalen Richtung (B), zwischen dem ersten proximalen äußeren Rollweg (35) und dem zweiten distalen äußeren Rollweg (36) zwischen 0,4*l1 und l1 beträgt, wobei l1 die Länge der Rollkörper der ersten proximalen Reihe von Rollkörpern (48) bezeichnet.

8. Rolllager für einen Fuß eines Schaufelblatts nach Anspruch 6 oder 7, ferner umfassend die eine und/oder die andere der folgenden Charakteristiken:

   - der Abstand (Ebi2) zwischen dem zweiten distalen inneren Rollweg (28) und der inneren Fläche (24) des zweiten inneren Rings (12) ist wenigstens gleich $\eta_{2r}*(d_{arbre2})^{n2r}$, wobei $\eta_{2r}$ ein Parameter wenigstens gleich 0,4 ist, $d_{arbre2}$ den inneren Durchmesser der inneren Fläche (14) des ersten inneren Rings (11) bezeichnet und n2r ein Parameter ist, welcher zwischen 0,4 und 0,5 beträgt;
   - die Achse der Rollkörper der zweiten distalen Reihe von Rollkörpern (49) bildet mit der longitudinalen Richtung einen Winkel, welcher zwischen 17° und 23° beträgt, wobei der minimale Durchmesser des Kegelstumpfs näher zu der Achse (B) ist als der maximale Durchmesser.

9. Rolllager für einen Fuß eines Schaufelblatts nach einem der Ansprüche 1 bis 4, wobei die Rollkörper der ersten proximalen Reihe von Rollkörpern (48) Kugeln sind, und optional ferner umfassend die eine und/oder die andere der folgenden Charakteristiken:

   - der radiale Abstand (Ebe1) von der äußeren Fläche der Kugel der ersten proximalen Reihe von Rollkörpern (48) bis zu der äußeren Fläche (34) des äußeren Rings (13) ist wenigstens gleich $\delta_{1eb}*\varphi_1$, wobei $\delta_{1eb}$ ein Sicherheitsparameter größer als 0,45 ist und $\varphi_1$ der Durchmesser der Kugeln der ersten proximalen Reihe von Rollkörpern (48) ist, und wobei der Abstand (Ebe1) größer als 8 Millimeter (mm) ist;
   - der radiale Abstand (Ebi1) von der äußeren Fläche der Kugel der ersten proximalen Reihe von Rollkörpern (48) bis zu der inneren Fläche (14) des ersten inneren Rings (11) ist wenigstens gleich $\delta_{1ib}{}^{*}\varphi_1$, wobei $\delta_{1ib}$ ein Sicherheitsparameter größer als 0,45 ist und $\varphi_1$ der Durchmesser der Kugeln der ersten proximalen Reihe von Rollkörpern (48) ist, und wobei der Abstand (Ebe1) größer als 8 Millimeter (mm) ist;
- die Achse der auf die Rollkörper der ersten proximalen Reihe von Rollkörpern (48) ausgeübten Beanspruchungen bildet mit der longitudinalen Richtung einen Winkel, welcher zwischen 25° und 35° beträgt.

10. Rolllager für einen Fuß eines Schaufelblatts nach einem der Ansprüche 1 bis 4 oder 9, wobei die Rollkörper der zweiten distalen Reihe von Rollkörpern (49) Kugeln sind,
und ferner optional umfassend die eine und/oder die andere der folgenden Charakteristiken:

- der radiale Abstand (Ebe2) von der äußeren Fläche der Kugel der zweiten distalen Reihe von Rollkörpern (49) bis zu der äußeren Fläche (34) des äußeren Rings (13) ist wenigstens gleich $\delta_{2eb}{}^{*}\varphi_2$, wobei $\delta_{2eb}$ ein Sicherheitsparameter größer als 0,4 ist und $\varphi_2$ der Durchmesser der Kugeln der zweiten distalen Reihe von Rollkörpern (49) ist, und wobei der Abstand (Ebe2) größer als 6 Millimeter (mm) ist;
- der radiale Abstand (Ebi2) von der äußeren Fläche der Kugel der zweiten distalen Reihe von Rollkörpern (49) bis zu der inneren Fläche (24) des zweiten inneren Rings (12) ist wenigstens gleich $\delta_{2eb}{}^{*}\varphi_2$, wobei $\delta2_{eb}$ ein Sicherheitsparameter größer als 0,4 ist und $\varphi_2$ der Durchmesser der Kugeln der zweiten distalen Reihe von Rollkörpern (49) ist, und wobei der Abstand (Ebi2) größer als 6 Millimeter (mm) ist;
- und der Abstand gemessen entlang der longitudinalen Richtung zwischen den Rollen der ersten Reihe von Rollkörpern (48) und den Rollen der zweiten Reihe von Rollkörpern (49) größer als $(\varphi1+\varphi2)/v$ ist, wobei $\varphi1$ den Durchmesser der Kugeln der ersten Reihe von Rollkörpern (48) bezeichnet, $\varphi2$ den Durchmesser der Kugeln der zweiten Reihe von Rollkörpern (49) bezeichnet und v ein Parameter ist, welcher zwischen 2 und 4,2 beträgt;
- die Achse von auf die Rollkörper der zweiten distalen Reihe von Rollkörpern (49) ausgeübten Belastungen bildet mit der longitudinalen Richtung einen Winkel, welcher zwischen 15° und 25° beträgt.

11. Rolllager für einen Fuß eines Schaufelblatts nach einem der Ansprüche 1 bis 10, wobei die Höhe (He) des Montageansatzes (39) an das Gehäuse so definiert ist, dass sie den folgenden Bedingungen gehorcht:

$$10 < \Phi1 / 2^{*}He < 25,$$

wobei $\Phi1$ dem äußeren Durchmesser des äußeren Rings (13) auf dem Niveau der ersten proximalen Reihe von Rollkörpern (48) entspricht.

12. Oszillierendes System, umfassend ein Rolllager (7) nach einem der Ansprüche 1 bis 11, ein Gehäuse (5), welches an den Montageansatz (39) an ein Gehäuse der äußeren Fläche (34) des einzelnen äußeren Rings (13) montiert ist, ein Schaufelblatt (4), welches einen Schaufelblatt-Fuß (4a) umfasst, welcher an dem Montageansatz (20) an einen Schaufelblatt-Fuß der inneren Fläche (14) des ersten inneren Rings (11) montiert ist, wobei das Schaufelblatt (4) oszillierend um die Achse (B), welche sich entlang der longitudinalen Richtung erstreckt, bezüglich des Gehäuses (5) unter Vermittlung des Rolllagers (7) montiert ist.

13. System, welches sich um eine Rotationsachse dreht, wobei das System wenigstens ein oszillierendes System nach Anspruch 12 umfasst, welches sich radial bezüglich der Rotationsachse (A) erstreckt, wobei das Rolllager (7) entfernt von der Rotationsachse (A) ist.

**Claims**

1. Rolling bearing for a blade root extending in a longitudinal direction (B) between a proximal end and a distal end, the rolling bearing allowing oscillation of the root about an axis (B) extending in the longitudinal direction relative to a housing,
the rolling bearing comprising:

- a single outer ring (13) having an inner surface (33) and an outer surface (34) opposite to the inner surface (33), the inner surface (33) of the outer ring (13) having a proximal first outer race (35) and a distal second outer race (36), the first and second outer races (35,36) being offset relative to one another in the longitudinal direction (B),
- a first inner ring (11) having an inner surface (14) and an outer surface (15) opposite to the inner surface (14), the outer surface (15) of the first inner ring (11) having a proximal first inner race (23) and a distal seat (16), the first inner race (23) and the seat (16) being offset relative to one another in the longitudinal direction (B),
- a second inner ring (12) having an inner surface (24) and an outer surface (25) opposite to the inner surface (24), the outer surface (25) of the second inner ring (12) having a distal second inner race (28), the second inner ring (12) being fitted onto the seat (16) and being held in axial abutment against the first inner ring (11), a single inner space (43) being defined between the inner surface (33) of the outer ring (13) and the outer surface (15,25) of the first and second inner rings (11,12), the single inner space (43) extending between a proximal end (44) where it is sealed by a proximal sealing system (45) between the outer ring (13) and the first inner ring (11) and a distal end (46) where it is sealed by a distal sealing system (47) between the outer ring (13) and the second inner ring (12),

- a proximal first row of rolling elements (48) mounted in the single inner space (43), rolling on the proximal first inner and outer races (23,35), and a distal second row of rolling elements (49) mounted in the single inner space (43), rolling on the distal second outer and inner races (36,28), the first and second rows of rolling elements (48,49) being spaced apart from each other along the longitudinal axis (B),

- the inner surface (14) of the first inner ring (11) comprising a shoulder (20) for assembly to a blade root,

- the outer surface (34) of the single outer ring (13) comprising a shoulder (39) for assembly to a housing,

**characterized in that** the rolling bearing further comprising a loading system (51) adapted to hold the second inner ring (12) in axial abutment against the first inner ring (11), the loading system (51) comprising an annular plate (52) having a bearing surface (53) in contact with the second inner ring (12) and urging the second inner ring (12) in the axial direction, the annular plate (52) being held secured to the first inner ring (11) by screwing of screws, the screws being tightened up to applying a loading force $F_{preload}$,

wherein the distance Ep, normal to the longitudinal direction, between the inner surface (14) of the first inner ring (11) and the receiving surface (18) of the second inner ring (12) in line therewith is defined by:

$$E_p = \sqrt{\frac{4 * Sf * F_{preload}}{0,9 * \pi * N * Re}} + \beta$$

, where

$E_p$ corresponds to the distance, normal to the longitudinal direction, between the inner surface (14) of the first inner ring (11) and the receiving surface (18) of the second inner ring (12) in line therewith,

$F_{preload}$ is the force by which the second inner ring (12) is held in axial abutment against the first inner ring (11),

Re is the yield strength of the screw material,

N is the number of screws (54) used to apply said force,

Sf is a safety parameter between 1.2 and 4,

$\beta$ is a parameter between 4 and 5;

**or**

wherein Ep, normal to the longitudinal direction, between the inner surface (14) of the first inner ring (11) and the receiving surface (18) of the second inner ring (12) in line therewith is defined by,

$$E_p = \gamma \sqrt{\frac{4 * Sf * F_{preload}}{0,9 * \pi * N * Re}}$$

$E_p$ corresponds to the distance, normal to the longitudinal direction, between the inner surface (14) of the first inner ring (11) and the receiving surface (18) of the second inner ring (12) in line therewith,

$F_{preload}$ is the force by which the second inner ring (12) is held in axial abutment against the first inner ring (11),

Re is the yield strength of the screw material,

N is the number of screws (54) used to apply said force,

Sf is a safety parameter between 1.2 and 4,

$\beta$ is a parameter between 4 and 5;

$\gamma$ is a weighting coefficient between 1 and 1.8; wherein, optionally, N is the nearest integer to or the integer immediately above $(\pi*d_{shaft})/(3.8*d_{screw})$, where $d_{shaft}$ is the inside diameter of the first inner ring (11),

$d_{screw}$ is the diameter of the screws (54).

2. Rolling bearing for a blade root according to claim 1, further comprising one and/or the other of the following arrangements:

- the shoulder (39) for assembly provided on the outer surface (34) of the single outer ring (13) is arranged axially between the first and second rows of rolling elements (48,49);
- the shoulder (20) for assembly provided on the inner surface (14) of the first inner ring (11) is arranged more proximally than the proximal first row of rolling elements (48).

3. Rolling bearing for a blade root according to any of claims 1 to 2, wherein the rolling elements of the two rows of rolling elements (48,49) have the same type of geometry.

4. Rolling bearing for a blade root according to any of claims 1 to 3, wherein the rolling elements of the first row, proximal, of rolling elements (48) are truncated cones arranged with the maximum diameter on the proximal side.

5. Rolling bearing for a blade root according to claim 4, further comprising the following characteristics:

   - the distance (Ebe)between the proximal first outer race (35) and the shoulder (39) for assembly to a housing is at least equal to $\delta_r \cdot d_{max}$, where $\delta_r$ is a safety parameter between 1 and 1.5, and $d_{max}$ is the maximum diameter of the rolling elements of the first row, proximal, of rolling elements;
   - the distance (Ebi1) between the proximal first inner race (23) and the shoulder (20) for assembly to a blade root is at least equal to $\eta_{1r} \cdot (d_{shaft})^{n1r}$, where $\eta_{1r}$ is a parameter at least equal to 0.4, $d_{shaft}$ denotes the inside diameter of the inner surface (14) of the first inner ring (11), and n1r is a parameter between 0.4 and 0.5;
   - the axis of the rolling elements of the first row, proximal, of rolling elements (48) forms an angle of between 35° and 45° with the longitudinal direction, the minimum diameter of the truncated cone being closer to the axis (B) than the maximum diameter.

6. Rolling bearing for a blade root according to any of claims 1 to 5, wherein the rolling elements of the second row, distal, of rolling elements (49) are truncated cones arranged with the maximum diameter on the distal side.

7. Rolling bearing for a blade root according to claim 6 or according to any of claims 4 to 5 wherein the distance (e), measured in the longitudinal direction (B), between the proximal first outer race (35) and the distal second outer race (36) is between 0.4*l1 and l1, where l1 denotes the length of the rolling elements of the first row, proximal, of rolling elements (48).

8. Rolling bearing for a blade root according to claim 6 or to claim 7, further comprising one and/or the other of the following characteristics:

   - the distance (Ebi1) between the distal second inner race (28) and the inner surface (24) of the second inner ring (12) is at least equal to $n_{2r} \cdot (d_{haft2})^{n2r}$, where $\eta_{2r}$ is a parameter at least equal to 0.4, $d_{shaft2}$ denotes the inside diameter of the inner surface (14) of the first inner ring (11), and n2r is a parameter between 0.4 and 0.5;
   - the axis of the rolling elements of the second row, distal, of rolling elements (49) forms an angle of between 17° and 23° with the longitudinal direction, the minimum diameter of the truncated cone being closer to the axis (B) than the maximum diameter.

9. Rolling bearing for a blade root according to any of claims 1 to 4, wherein the rolling elements of the first row, proximal, of rolling elements (48) are balls, and optionally further comprising one or more of the following characteristics:

   - the radial distance (Ebe1) from the outer surface of the ball bearing of the first row, proximal, of rolling elements (48) to the outer surface (34) of the outer ring (13) is at least equal to $\delta_{1eb} \cdot \varphi_1$, where $\delta_{1eb}$ is a safety parameter greater than 0.45, and $\varphi_1$ is the diameter of the ball bearings of the first row, proximal, of rolling elements (48), and said distance (Ebe1) is greater than 8 millimeters;
   - the radial distance (Ebi1) from the outer surface of the ball bearing of the first row, proximal, of rolling elements (48) to the inner surface (14) of the first inner ring (11) is at least equal to $\delta_{1ib} \cdot \varphi_1$, where $\delta_{1ib}$ is a safety parameter greater than 0.45, and $\varphi_1$ is the diameter of the ball bearings of the first row, proximal, of rolling elements (48), and said distance (Ebe1) is greater than 8 millimeters;
   - the axis of the forces applied to the rolling elements of the first row, proximal, of rolling elements (48) forms an angle of between 25° and 35°with the longitudinal direction.

10. Rolling bearing for a blade root according to any of claims 1 to 4 or to claim 9, wherein the rolling elements of the second row, distal, of rolling elements are ball bearings (49), and optionally further comprising one or more of the following characteristics:

   - the radial distance (Ebe2) from the outer surface of the ball bearing of the second row, distal, of rolling elements (49) to the outer surface (34) of the outer ring (13) is at least equal to $\delta_{2eb} \cdot \varphi_2$, where $\delta_{2eb}$ is a safety parameter greater than 0.4, and $\varphi_2$ is the diameter of the ball bearings of the second row, distal, of rolling elements (49), and said distance (Ebe2) is greater than 6 millimeters;
   - the radial distance (Ebi2) from the outer surface of the ball bearing of the second row, distal, of rolling elements (49) to the inner surface (24) of the second inner ring (12) is at least equal to $\delta_{2eb} \cdot \varphi_2$, where $\delta_{2eb}$ is a safety parameter greater than 0.4, and $\varphi_2$ is the diameter of the ball bearings of the second row, distal, of rolling elements (49), and said distance (Ebi2) is greater than 6 millimeters;

and the distance, measured in the longitudinal direction, between the ball bearings of the first row of rolling elements (48) and the ball bearings of the second row of rolling elements (49) is greater than $(\varphi 1 + \varphi 2)/v$, where $\varphi 1$ denotes the diameter of the ball bearings of the first row of rolling elements, $\varphi 2$ denotes the diameter the ball bearings of the second row of rolling elements, and v is a parameter between 2 and 4.2 ;
- the axis of the forces applied to the rolling elements of the second row, distal, of rolling elements forms an angle of between 15° and 25° with the longitudinal direction.

11. Rolling bearing for a blade root according to any of claims 1 to 10, wherein the height of the shoulder for assembly to the housing is defined so as to satisfy the following conditions:

$$10 < \Phi 1 / 2.He < 25,$$

where $\Phi 1$ corresponds to the outside diameter of the outer ring (13) at the proximal first row of rolling elements (48).

12. Oscillating system comprising a rolling bearing (7) according to any of claims 1 to 11, a housing (5) assembled to the shoulder (39) for assembly to a housing of the outer surface (34) of the single outer ring (13), a blade (4) comprising a blade root (4a) assembled to the shoulder (20) for assembly to a blade root of the inner surface (14) of the first inner ring (11), the blade (4) being mounted so as to oscillate about said axis (B) extending in the longitudinal direction relative to the housing (5) by means of the rolling bearing (7).

13. System rotating about an axis of rotation, the system comprising at least one oscillating system according to claim 12 extending radially relative to the axis of rotation (A), the rolling bearing (7) being spaced from the axis of rotation (B).

FIG. 1

FIG. 2

FIG. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2251896 A
- FR 2862609
- FR 3017163